# EUROPÄISCHE PATENTANMELDUNG

(11) **EP 0 947 400 A2**
(43) Veröffentlichungstag der Anmeldung: **06.10.1999**
(21) Anmeldenummer: 99105154.1
(22) Anmeldetag: 29.03.1999
(51) Int. Cl.: B60R 22/18

(54) **Strafferantrieb für Gurtaufroller**

(30) Priorität: 31.03.1998 DE 29805894 U
(71) Anmelder: TRW Occupant Restraint Systems GmbH & Co. KG, 73551 Alfdorf (DE)
(72) Erfinder: Holzapfel, Volker, 66606 St. Wendel (DE)
(74) Vertreter: Degwert, Hartmut, Dipl.-Phys.

(57) **Zusammenfassung**

Ein Strafferantrieb für ein Fahrzeugsicherheitsgurtsystem hat eine Druckgasquelle (32) und eine von der Druckgasquelle (32) beaufschlagbare Turbine. Die Turbine weist ein Turbinenrad (26) in einem Gehäuse (20) auf. In dem Gehäuse (20) umgibt ein von der Druckgasquelle (32) beaufschlagbarer Ringraum (30) das Turbinenrad (26). Von dem Ringraum (30) ausgehend sind mehrere Düsenöffnungen (48) auf das Turbinenrad (26) gerichtet.

## Beschreibung

Die Erfindung betrifft einen Strafferantrieb für einen Gurtaufroller in Fahrzeugsicherheitssystemen mit einer Druckgasquelle und einer von der Druckgasquelle beaufschlagbaren Turbine. Die Erfindung betrifft ebenfalls einen Gurtaufroller für Fahrzeugsicherheitssysteme mit einer Gurtspule und einem Gurtstraffer.

Gattungsgemäße Strafferantriebe und Gurtaufroller sind bekannt. In der deutschen Offenlegungsschrift 21 21 101 ist ein Sicherheitsgurt für Fahrzeuge mit einem Gurtaufroller und einem Strafferantrieb beschrieben. Bei Überschreiten eines vorgegebenen Verzögerungswertes wird eine Druckgaspatrone gezündet, und das von dieser entwickelte Druckgas beaufschlagt ein Turbinenrad. Das aus der Druckgaspatrone austretende Druckgas wird dem Turbinenrad über einen einzelnen, zum Umfang des Turbinenrades im wesentlichen tangentialen Kanal zugeführt. Turbine und Kanal sind in einem gemeinsamen Gehäuse untergebracht.

Die deutsche Patentschrift 26 18 119 C2 beschreibt einen Strafferantrieb für einen Gurtaufroller, bei dem der Explosionsdruck eines Treibsatzes auf eine Freistrahlturbine einwirkt. Zwischen dem Treibsatz und der Turbine ist eine den Explosionsdruck des Treibsatzes übertragende Flüssigkeit in einem Behälter oder einer Rohrschlange angeordnet. Durch eine einzelne Düse am Ende des Behälters oder der Rohrschlange tritt die Flüssigkeit aus und beaufschlagt das freistehende Turbinenrad. Turbinenrad und Gurtspule sind auf einer gemeinsamen Welle angeordnet.

Die deutsche Offenlegungsschrift DE 43 19 273 A1 beschreibt einen Gurtaufroller für Fahrzeugsicherheitsgurtsysteme mit einem an der Gurtspule angreifenden rotatorischen Gurtstrafferantrieb. Zwischen dem Gurtstrafferantrieb und der Gurtspule ist ein ins Schnelle übersetzendes Planetenradgetriebe vorgesehen.

Mit der Erfindung soll ein kompakter Aufbau und ein hoher Wirkungsgrad eines Strafferantriebs und eines Gurtaufrollers bei der Gurtstraffung erreicht werden.

Erfindungsgemäß ist hierzu ein Strafferantrieb für ein Fahrzeugsicherheitsgurtsystem mit einer Druckgasquelle und einer von der Druckgasquelle beaufschlagbaren Turbine, die ein Turbinenrad in einem Gehäuse aufweist, vorgesehen, bei dem in dem Gehäuse ein von der Druckgasquelle beaufschlagbarer Ringraum das Turbinenrad umgibt und von dem Ringraum ausgehend mehrere Düsenöffnungen auf das Turbinenrad gerichtet sind.

Erfindungsgemäß ist hierzu ebenfalls ein Gurtaufroller für Fahrzeugsicherheitssysteme mit einer Gurtspule und einem Gurtstraffer mit einem erfindungsgemäßen Strafferantrieb vorgesehen, bei dem das Turbinenrad triebschlüssig mit der Gurtspule gekoppelt ist und das Gehäuse am Rahmen des Gurtaufrollers angeschlossen ist.

Das Vorsehen eines das Turbinenrad umgebenden Ringraumes in Verbindung mit mehreren auf das Turbinenrad gerichteten Düsenöffnungen, die von dem Ringraum ausgehen, ermöglicht eine gleichmäßige Beaufschlagung des Turbinenrades mit den von der Druckgasquelle erzeugten Druckgasen über mehrere Umdrehungen des Turbinenrades. Durch einen einfachen und kompakten Aufbau können dadurch an mehreren, um den Umfang des Turbinenrades verteilten Düsen gleichmäßige Druckverhältnisse geschaffen werden, die einen zuverlässigen Anlauf und einen hohen Wirkungsgrad des Strafferantriebs sicherstellen. Die Turbine kann dabei als Freistrahlturbine, beispielsweise als Peltonturbine ausgebildet sein. Bei dem erfindungsgemäßen Gurtaufroller ist der Straffweg nicht durch die Geometrie der Einzelteile sondern nur durch die Kapazität der Druckgasquelle begrenzt. Die triebschlüssige Kopplung von Turbinenrad und Gurtspule vermeidet eine Zeitverzögerung zu Beginn des Straffvorgangs.

In Weiterbildung der Erfindung ist vorgesehen, daß die Druckgasquelle als Ringtreibgasgenerator aufgebaut ist, der in dem Ringraum angeordnet ist. Eine solche Ausbildung der Druckgasquelle ist bezüglich einer gleichmäßigen Druckverteilung auf die mehreren Düsenöffnungen und bezüglich eines kompakten Aufbaus des Strafferantriebs vorteilhaft.

Als weiterbildende Maßnahme wird vorgeschlagen, daß das Gehäuse in der Mittelebene des Turbinenrades geteilt ist. Hierdurch kann das Gehäuse in einfacher Weise hergestellt werden, da bei der Fertigung des Ringraumes keine Hinterschneidungen erforderlich sind. Auch in der Mittelebene des Turbinenrades liegende Düsenöffnungen können auf diese Weise einfach hergestellt werden.

In Weiterbildung der Erfindung ist vorgesehen, daß ein Zünder radial außerhalb des Ringtreibgasgenerators angeordnet ist. Die Trennung von Ringtreibgasgenerator und Zünder erlaubt eine sichere Montage des Strafferantriebs.

Als weitere weiterbildende Maßnahme ist vorgesehen, daß das Gehäuse einen Turbinenraum und einen zu einer Seitenfläche des Gehäuses hin offenen Abgasraum aufweist, der über wenigstens eine erste Abgasbohrung mit dem Turbinenraum verbunden ist. Das System ist damit offen, und es wird nur der Staudruck der Düsenstrahlen genutzt, so daß innerhalb des Strafferantriebes keine hohen Überdrücke entstehen können. Sicherheitsvorkehrungen bezüglich der Berstsicherheit des Strafferantriebs entfallen dadurch, und auch bei unterschiedlichen Straffwegen entstehen keine Druckspitzen, die durch eine Berstsicherung abgefangen werden müßten. Ein zu einer Seitenfläche des Gehäuses hin offener Abgasraum bildet beim Anbau der Seitenfläche des Gehäuses an einen Rahmen ein Dämpfungsvolumen für austretendes Druckgas. Ohne zusätzliche Bauteile kann dadurch eine Dämpfungsfunktion verwirklicht werden.

Bei einem erfindungsgemäßen Gurtaufroller ist es vorteilhaft, daß im Kraftfluß zwischen dem Turbinenrad und der Gurtspule ein ins Langsame übersetzendes Planetenradgetriebe vorgesehen ist, die Gurtspule auf einer Abtriebswelle des Turbinenrades gelagert ist, die Abtriebswelle des Turbinenrades eine Außenverzahnung aufweist, die mit wenigstens einem Planetenrad in Eingriff steht, und ein Hohlrad des Planetenradgetriebes in einem ersten Gurtspulenflansch angeordnet ist. Die bei der Gurtstraffung auftretenden hohen Drehmomente können durch ein Planetenradgetriebe zuverlässig übertragen werden. Die Lagerung der Gurtspule auf der Abtriebswelle des Turbinenrades, deren Verzahnung mit einem Planetenrad in Eingriff steht, und die Anordnung des Hohlrades des Planetenradgetriebes in einem ersten Gurtspulenflansch ermöglichen einen besonders kompakten Aufbau des Gurtaufrollers.

Als weiterbildende Maßnahme ist vorgesehen, daß eine Freilaufbremse in einem zweiten Gurtspulenflansch angeordnet ist. Eine Freilaufbremse verhindert einen Gurtbandauszug nach erfolgter Straffung. Auch die Anordnung der Freilaufbremse in dem zweiten Gurtspulenflansch dient einem platzsparenden und kompakten Aufbau.

Schließlich ist vorgesehen, daß zwischen der Gurtspule und dem Gehäuse des Strafferantriebs ein Rahmenschenkel angeordnet ist, das wenigstens eine Planetenrad auf einem Lagerteil gelagert ist, das an der Gurtspule zugewandten Seite des Rahmenschenkels angebracht ist, wobei zwischen Lagerteil und Rahmenschenkel ein Hohlraum gebildet ist, der über wenigstens eine Abgasöffnung mit der Umgebung verbunden ist, das Gehäuse einen Turbinenraum und einen zu einer dem Rahmenschenkel zugewandten Gehäuseseite hin offenen Abgasraum aufweist, der über eine erste Abgasbohrung mit dem Turbinenraum verbunden ist, und in dem Rahmenschenkel wenigstens eine zweite Abgasbohrung vorgesehen ist, die den Abgasraum mit dem Hohlraum verbindet. Ohne zusätzliche Bauteile und bei kompaktem Aufbau wird durch eine solche Ausbildung des Gurtaufrollers eine zweistufige Dämpfungsanordnung für austretende Druckgase geschaffen. Die Abgasöffnung des Hohlraums kann dabei direkt mit dem Fahrzeugäusseren in Verbindung stehen, so daß die austretenden Druckgase nicht ins Fahrzeuginnere gelangen.

Weitere Merkmale und Vorteile der Erfindung ergeben sich aus der folgenden Beschreibung und aus der Zeichnung, auf die Bezug genommen wird. In der Zeichnung zeigen:
Fig. 1 eine teilweise geschnittene perspektivische Ansicht einer bevorzugten Ausführungsform des erfindungsgemäßen Gurtaufrollers,
Fig. 2 eine abschnittsweise Teilschnittansicht des Gurtaufrollers der Fig. 1,
Fig. 3 den in den Fig. 1 und 2 dargestellten Strafferantrieb bei abgenommener vorderer Gehäusehälfte und
Fig. 4 eine Explosionsansicht der bevorzugten Ausführungsform des erfindungsgemäßen Gurtaufrollers.

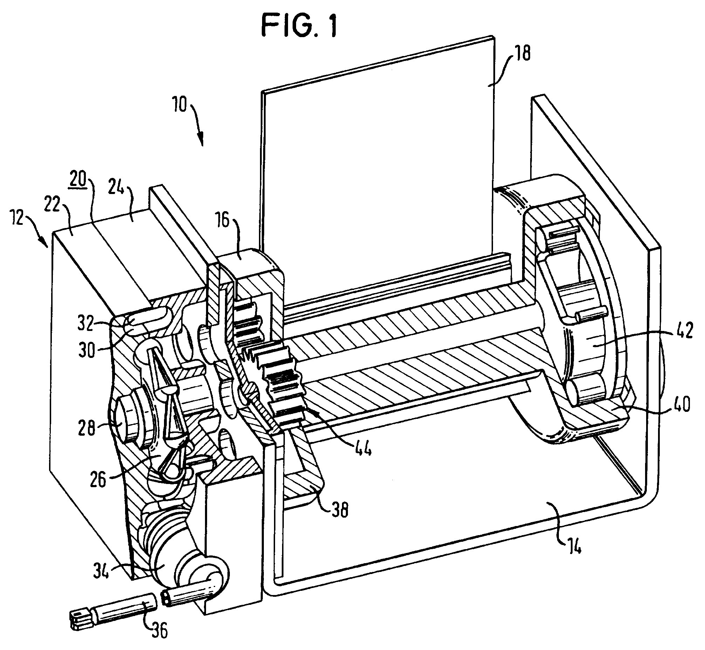

Der in der Fig. 1 dargestellte Gurtaufroller 10 ist mit einem Strafferantrieb 12 versehen. Der Gurtaufroller 10 weist einen U-förmigen Rahmen 14 auf, zwischen dessen Schenkeln eine Gurtspule 16 zur Aufnahme von Gurtband 18 angeordnet ist. Der Strafferantrieb 12 weist ein Gehäuse 20 auf, das aus zwei Gehäusehälften 22 und 24 besteht. Innerhalb des Gehäuses 20 ist ein Turbinenrad 26 auf einer Abtriebswelle 28 angeordnet, die wiederum in dem Gehäuse 20 gelagert ist. Das Turbinenrad 26 ist von einem Ringraum 30 umgeben, in dem ein Ringgasgenerator 32 angeordnet ist. Ein Zünder 34, der radial außerhalb des Ringgasgenerators 32 in dem Gehäuse 20 angeordnet ist, kann über eine Zuleitung 36 elektrisch aktiviert werden und dient zum Zünden des Ringgasgenerators 32. Die Abtriebswelle 28 des Turbinenrades 26 erstreckt sich durch den U-förmigen Rahmen 14, und die Gurtspule 16 ist auf der Abtriebswelle 28 drehbar gelagert. Die Gurtspule 16 ist an jedem ihrer axialen Enden mit einem Flansch 38 bzw. 40 versehen, die jeweils eine zur Längsachse der Gurtspule 16 konzentrische zylindrische Ausnehmung aufweisen. In dem dem Strafferantrieb 12 abgewandten Flansch 40 ist eine Freilaufbremse 42 mit konventionellem Aufbau angeordnet. In dem dem Strafferantrieb 12 zugewandten Flansch 38 der Gurtspule ist ein Planetenradgetriebe 44 untergebracht, dessen Aufbau noch genauer beschrieben wird.

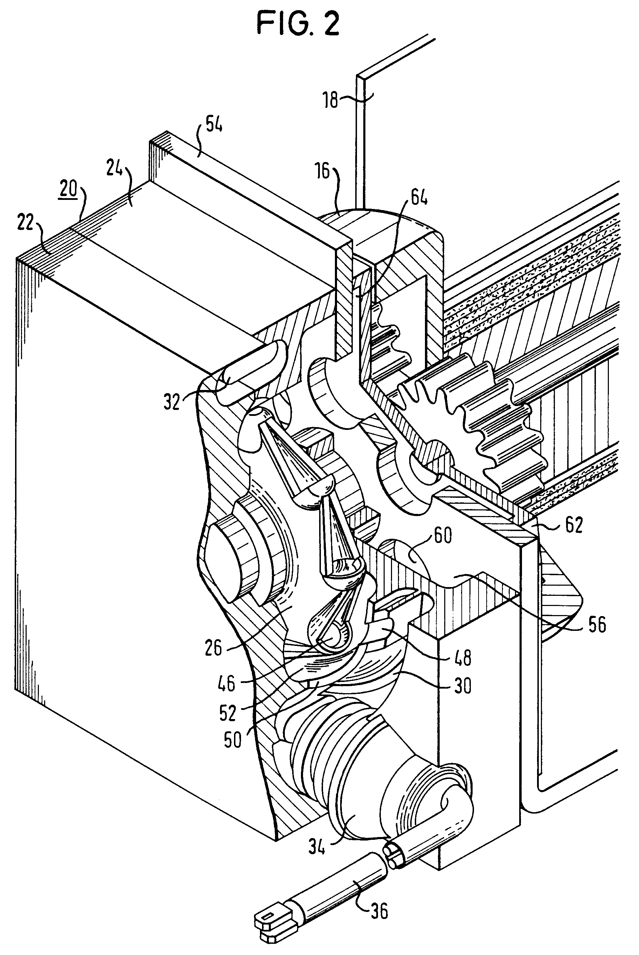

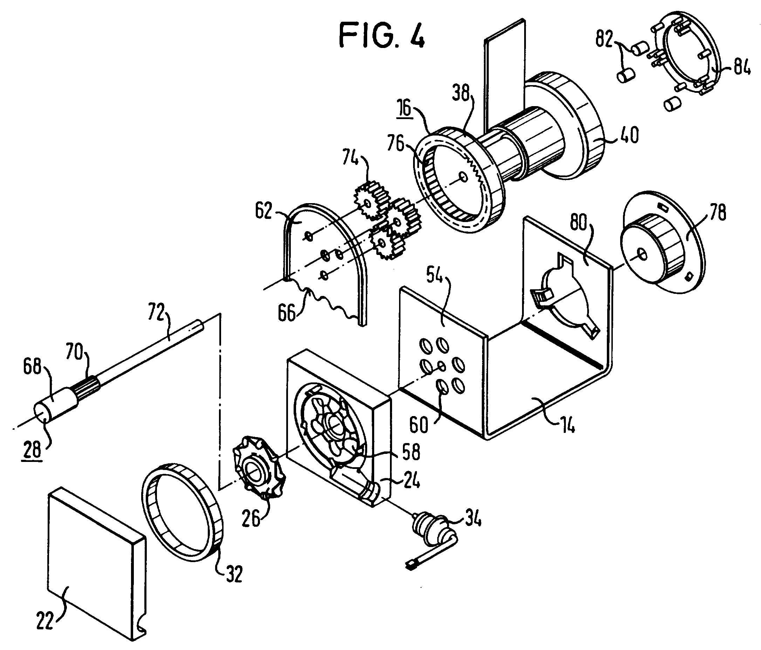

In der vergrößerten Darstellung der Fig. 2 ist das Turbinenrad 26 zu erkennen, das an seinem Umfang mit Schaufeln 46 versehen ist. Nach Aktivierung des Ringgasgenerators 32 werden die Schaufeln 46 durch Druckgas beaufschlagt, das sich in dem Ringkanal 30 ausbreitet und über mehrere Düsen 48 auf die Schaufeln 46 gelangt. Die Düsen 48 sind gleichmäßig über den Umfang des Turbinenrades 26 verteilt in einer Umfangswand 50 angeordnet, die das Turbinenrad 26 von dem Ringraum 30 trennt. Der zweiteilige Aufbau des Gehäuses 20 aus den Gehäusehälften 22 und 24 ist in der Fig. 2 gut zu erkennen und erlaubt eine einfache Herstellung des Ringraumes 30, der Düsen 48 und eines Turbinenraums 52, der das Turbinenrad 26 aufnimmt. Die Abtriebswelle 28 ist in beiden Gehäusehälften 22 und 24 gelagert. Die an dem Rahmenschenkel 54 angeordnete Gehäusehälfte 24 ist mit einem Abgasraum 56 versehen, der zu der dem Rahmenschenkel 54 zugewandten Seitenfläche der Gehäusehälfte 24 hin offen ist. Der Abgasraum 56 steht mit dem Turbinenraum 52 über mehrere erste Abgasbohrungen 58, siehe Fig. 4, in Verbindung. Der Rahmenschenkel 54 ist mit mehreren zweiten Abgasbohrungen 60 versehen. Auf der der Gurtspule 16 zugewandten Seite des Rahmenschenkels 54 ist ein Lagerteil 62 angeordnet, wobei zwischen Lagerteil 62 und Rahmenschenkel 54 ein Hohlraum 64 gebildet ist. Der Hohlraum 64 steht über in dem Lagerteil 62 gebildete Abgasöffnungen 66, siehe Fig. 4, mit der Umgebung in Verbindung. Für die aus dem Turbinenraum 52 durch die ersten Abgasbohrungen 58 austretenden Druckgase ist somit durch den Abgasraum 56 und den Hohlraum 64 eine zweistufige Dämpfungsanordnung geschaffen. Der Strafferantrieb 20 ist in der gezeigten Ausführungsform mit einer Peltonturbine realisiert.

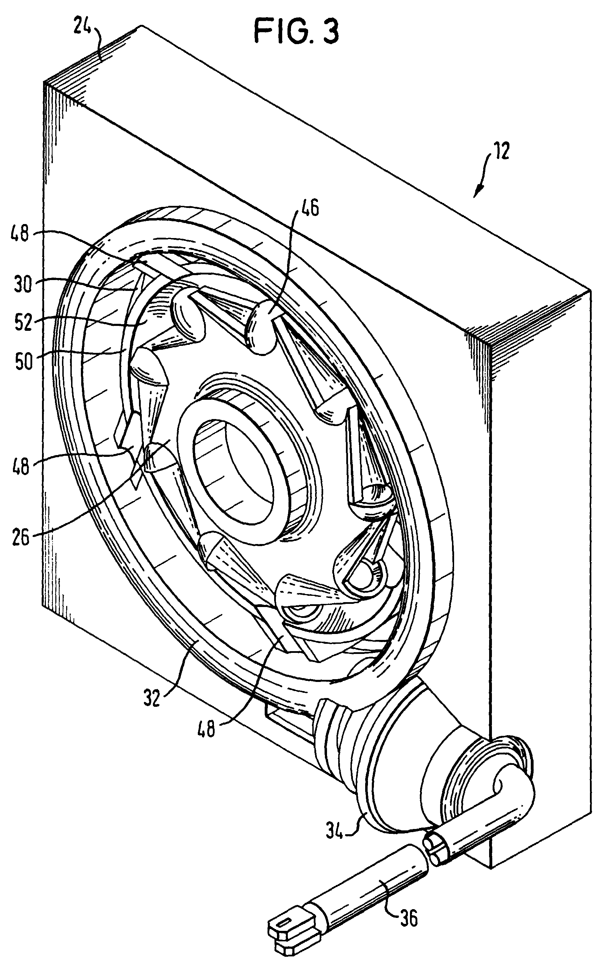

Fig. 3 zeigt den Strafferantrieb 12, wobei die in der Fig. 2 gezeigte vordere Gehäusehälfte 22 abgehoben ist. Der Ringtreibgasgenerator 32 ist in der Hälfte des Ringraums 30 angeordnet, der in der Gehäusehälfte 24 ausgebildet ist. In der Umfangswand 50, die den Turbinenraum 52, in dem das Turbinenrad 26 angeordnet ist, von dem Ringraum 30 trennt, sind mehrere Düsenöffnungen 48 vorgesehen, die in Umfangsrichtung gleichmäßig über die Umfangswand 50 verteilt sind. Die Düsenöffnungen 48 sind dabei schräg zu der Umfangswand 50 angeordnet, so daß durch sie austretendes Druckgas in der vorgesehenen Drehrichtung auf die Schaufeln 46 des Turbinenrades 26 auftrifft. Da der Ringtreibgasgenerator 32 den Ringraum 30 nicht vollständig ausfüllt, können die nach der Aktivierung des Ringtreibgasgenerators 32 durch den Zünder 34 entwickelten Druckgase sich gleichmäßig in dem Ringraum 30 verteilen. Die Druckgase werden daher an allen Düsenöffnungen 48 im wesentlichen mit der gleichen Geschwindigkeit austreten, so daß eine gleichmäßige Beaufschlagung des Turbinenrades 26 sichergestellt ist. Die Zuleitung 36 des Zünders 34 führt zu einer konventionellen Auslöseeinrichtung.

Fig. 4 zeigt eine Explosionsansicht des erfindungsgemäßen Gurtaufrollers. Die Abtriebswelle 28 des Turbinenrades 26 weist einen ersten Abschnitt 68 auf, auf dem das Turbinenrad 26 befestigt ist und der zu beiden Seiten des Turbinenrades 26 jeweils in den Gehäusehälften 22 bzw. 24 gelagert ist. Ein zweiter Abschnitt der Abtriebswelle 28 ist mit einer Außenverzahnung 70 versehen und dient als Sonnenrad des Planetenradgetriebes. Ein dritter Abschnitt 72 der Abtriebswelle 28 erstreckt sich durch beide Schenkel des Rahmens 14 und dient der Lagerung der Gurtspule 16. Das Planetenradgetriebe besteht aus der Außenverzahnung 70 im zweiten Abschnitt der Abtriebswelle 28, drei Planetenrädern 74 sowie einer als Hohlrad dienenden Innenverzahnung 76 im Gurtspulenflansch 38. Die Planetenräder 74 sind an dem Lagerteil 62 drehbar gelagert. Durch das Planetenradgetriebe wird eine Drehung der Abtriebswelle 28 über die Außenverzahnung 70, die Planetenräder 74 und die Innenverzahnung 76 auf die Gurtspule 16 übertragen und dabei ins Langsame übersetzt. Wie in der Fig. 4 zu erkennen ist, ist die dem Rahmenschenkel 54 zugewandte Gehäusehälfte 24 mit sechs ersten Abgasbohrungen 58 versehen. Im Rahmenschenkel 54 sind hierzu fluchtend sechs zweite Abgasbohrungen 60 angeordnet. Die von dem Ringtreibgasgenerator 32 erzeugten und aus dem Turbinenraum durch die ersten Abgasbohrungen 58 austretenden Druckgase durchqueren die zweiten Abgasbohrungen 60 und treten schließlich durch die Abgasöffnungen 66 im Lagerteil 62 in die Umgebung aus. Der dem Planetenradgetriebe gegenüberliegende Flansch 40 der Gurtspule 16 dient zur Aufnahme der konventionellen Freilaufbremse. Die Freilaufbremse weist ein Lagerteil 78, das in einer Aussparung eines Rahmenschenkels 80 angeordnet ist und in dem der dritte Abschnitt 72 der Abtriebswelle 28 gelagert ist, Rollen 82 und einen Lagerkäfig 84 auf.

## Patentansprüche

1. Strafferantrieb für ein Fahrzeugsicherheitsgurtsystem mit einer Druckgasquelle (32) und einer von der Druckgasquelle (32) beaufschlagbaren Turbine, die ein Turbinenrad (26) in einem Gehäuse (20) aufweist, dadurch gekennzeichnet, daß in dem Gehäuse (20) ein von der Druckgasquelle (32) beaufschlagbarer Ringraum (30) das Turbinenrad (26) umgibt und von dem Ringraum (30) ausgehend mehrere Düsenöffnungen (48) auf das Turbinenrad (26) gerichtet sind.

2. Strafferantrieb nach Anspruch 1, dadurch gekennzeichnet, daß die Druckgasquelle als in dem Ringraum (30) angeordneter Ringtreibgasgenerator (32) aufgebaut ist.

3. Strafferantrieb nach Anspruch 2, dadurch gekennzeichnet, daß das Gehäuse (20) in der Mittelebene des Turbinenrades (26) geteilt ist.

4. Strafferantrieb nach Anspruch 2 oder 3, dadurch gekennzeichnet, daß ein Zünder (34) radial außerhalb des Ringtreibgasgenerators (32) angeordnet ist.

5. Strafferantrieb nach einem der vorstehenden Ansprüche, dadurch gekennzeichnet, daß das Gehäuse (20) einen Turbinenraum (52) und einen zu einer Seitenfläche des Gehäuses (20) hin offenen Abgasraum (56) aufweist, der über wenigstens eine erste Abgasbohrung (58) mit dem Turbinenraum (52) verbunden ist.

6. Gurtaufroller für Fahrzeugsicherheitssysteme mit einer Gurtspule (16) und einem Gurtstraffer, gekennzeichnet durch einen Strafferantrieb (12) nach einem der vorstehenden Ansprüche, wobei das Turbinenrad (26) und die Gurtspule (16) triebschlüssig gekoppelt sind und das Gehäuse (20) am Rahmen (14) des Gurtaufrollers angeschlossen ist.

7. Gurtaufroller nach Anspruch 6, dadurch gekennzeichnet, daß im Kraftfluß zwischen dem Turbinenrad (26) und der Gurtspule (16) ein ins Langsame übersetzendes Planetenradgetriebe (44) vorgesehen ist, die Gurtspule (16) auf einer Abtriebswelle (28) des Turbinenrades (26) gelagert ist, die Abtriebswelle (28) des Turbinenrades (26) eine Außenverzahnung (70) aufweist, die mit wenigstens einem Planetenrad (74) in Eingriff steht, und ein Hohlrad (76) des Planetenradgetriebes (44) in einem ersten Gurtspulenflansch (38) angeordnet ist.

8. Gurtaufroller nach Anspruch 6 oder 7, dadurch gekennzeichnet, daß eine Freilaufbremse (42) in einem zweiten Gurtspulenflansch (40) angeordnet ist.

9. Gurtaufroller nach einem der Ansprüche 6 bis 8, dadurch gekennzeichnet, daß zwischen der Gurtspule (16) und dem Gehäuse (20) des Strafferantriebs (12) ein Rahmenschenkel (54) angeordnet ist, das wenigstens eine Planetenrad (74) auf einem Lagerteil (62) gelagert ist, das an der der Gurtspule (16) zugewandten Seite des Rahmenschenkels (54) angebracht ist, wobei zwischen Lagerteil (62) und Rahmenschenkel (54) ein Hohlraum (64) gebildet ist, der über wenigstens eine Abgasöffnung (66) mit der Umgebung verbunden ist, das Gehäuse (20) einen Turbinenraum (52) und einen zu einer dem Rahmenschenkel (54) zugewandten Gehäuseseite hin offenen Abgasraum (56) aufweist, der über eine erste Abgasbohrung (58) mit dem Turbinenraum (52) verbunden ist, und in dem Rahmenschenkel (54) wenigstens eine zweite Abgasbohrung (60) vorgesehen ist, die den Abgasraum (56) mit dem Hohlraum (64) verbindet.
